# EUROPEAN PATENT APPLICATION

(11) **EP 4 588 869 A1**
(43) Date of publication of application: **23.07.2025**
(21) Application number: 24217726.9
(22) Date of filing: 05.12.2024
(51) Int. Cl.: B65G 67/04

(54) **YARN SPINDLE LOADING AND UNLOADING METHOD AND SYSTEM, ELECTRONIC DEVICE AND STORAGE MEDIUM**

(30) Priority: 17.01.2024 CN 202410071833
(71) Applicant: Zhejiang Hengyi Petrochemical Co., Ltd., Zhejiang 311200 (CN); Hangzhou Yichen Chemical Fiber Co., Ltd, Hangzhou City Zhejiang 311247 (CN); SHAOXING SHENGONG PACKAGING CO., LTD., Shaoxing City, Zhejiang 311200 (CN)
(72) Inventor: WANG, Peng, Hangzhou, 311200 (CN); PENG, Xiantao, Hangzhou, 311200 (CN); QIU, Yibo, Hangzhou, 311200 (CN); JIN, Junliang, Hangzhou, 311200 (CN); LIU, Mingyi, Hangzhou, 311200 (CN); CHEN, Qing, Hangzhou, 311200 (CN); LI, Dake, Hangzhou, 311200 (CN)
(74) Representative: EIP

(57) **Abstract**

The present disclosure provides a yarn spindle loading and unloading method and system, an electronic device and a storage medium, and relates to the field of computer and mechanical technologies. The specific implementation solution is: when a yarn spindle clamping component (110) establishes a Bluetooth connection with a first terminal of a flatbed truck, loading a first yarn spindle product with product information matching a Bluetooth pairing code of the first terminal on a truck, and sending the position of the first yarn spindle product on the truck and the product information of the first yarn spindle product to the first terminal through the Bluetooth connection for associated storage.

## Description

### TECHNICAL FIELD

The present disclosure relates to the field of computer technologies. The present disclosure specifically relates to a yarn spindle loading and unloading method and system, an electronic device and a storage medium.

### BACKGROUND

After the production of chemical fiber products is completed, the chemical fiber products are generally transported and delivered to purchasers by trucks or the like. Usually, the corresponding batches of chemical fiber products are transported into compartments of trucks manually. In this way, the loading and unloading speed is slow and the labor cost is high.

### SUMMARY

The present disclosure provides a yarn spindle loading and unloading method and system, an electronic device and a storage medium.

According to an aspect of the present disclosure, provided is a yarn spindle loading and unloading method, applied to a yarn spindle clamping component, including:
when a first Bluetooth module in the yarn spindle clamping component establishes a Bluetooth connection with a second Bluetooth module in a first terminal corresponding to a flatbed truck, controlling a camera in the yarn spindle clamping component to respectively shoot the flatbed truck and a yarn spindle unloading platform to obtain an image of the flatbed truck and an image of the yarn spindle unloading platform, determining position information of a target stacking position for stacking yarn spindles on the flatbed truck according to the image of the flatbed truck, and determining position information of a first yarn spindle product on the yarn spindle unloading platform according to the image of the yarn spindle unloading platform;
controlling a first slider, a second slider and the yarn spindle clamping component to slide on a first track, a second track and a third track respectively according to the position information of the first yarn spindle product, so that the yarn spindle clamping component moves to above the yarn spindle unloading platform and is aligned with the first yarn spindle product, where the third track is perpendicular to the first track and the second track parallel to each other, and the first track, the second track and the third track are suspended in air;
scanning an information code on the first yarn spindle product to obtain product information of the first yarn spindle product, and controlling the yarn spindle clamping component to clamp the first yarn spindle product when the product information of the first yarn spindle product matches a pairing code of the second Bluetooth module;
controlling the first slider, the second slider and the yarn spindle clamping component to slide on the first track, the second track and the third track respectively according to the position information of the target stacking position, so that the yarn spindle clamping component moves to above the target stacking position;
controlling the yarn spindle clamping component to unload the first yarn spindle product to the target stacking position; and
sending the position information of the target stacking position and the product information of the first yarn spindle product to the first terminal based on the Bluetooth connection, so that the first terminal records the position information of the target stacking position and the product information of the first yarn spindle product in association.

According to another aspect of the present disclosure, provided is a yarn spindle loading and unloading system, including:
a first track and a second track parallel to each other;
a third track, where a first end and a second end of the third track are vertically connected to the first track and the second track respectively through a first slider and a second slider, the first track, the second track and the third track are suspended above a yarn spindle unloading platform, and the yarn spindle unloading platform is located between an orthographic projection of the first track on ground and an orthographic projection of the second track on ground; and
a yarn spindle clamping component slidably arranged on the third track and configured to perform the yarn spindle loading and unloading method according to any one of embodiments of the present disclosure.

According to yet another aspect of the present disclosure, provided is an electronic device, including:
at least one processor; and
a memory connected in communication with the at least one processor;
where the memory stores an instruction executable by the at least one processor, and the instruction, when executed by the at least one processor, enables the at least one processor to execute the yarn spindle loading and unloading method according to any one of embodiments of the present disclosure.

According to yet another aspect of the present disclosure, provided is a non-transitory computer-readable storage medium storing a computer instruction thereon, and the computer instruction is used to cause a computer to execute the yarn spindle loading and unloading method according to any one of embodiments of the present disclosure.

According to the technology of the present disclosure, when the Bluetooth connection is established between the first Bluetooth module in the yarn spindle clamping component and the second Bluetooth module in the first terminal corresponding to the flatbed truck, the yarn spindle clamping component is moved to above the yarn spindle unloading platform and aligned with the first yarn spindle product according to the position information of the first yarn spindle product on the yarn spindle unloading platform, and then the information code on the first yarn spindle product is scanned to obtain the product information of the first yarn spindle product. Further, when the product information of the first yarn spindle product matches the pairing code of the second Bluetooth module, the yarn spindle clamping component is controlled to clamp the first yarn spindle product, and then the yarn spindle clamping component is moved to above the target stacking position and is controlled to unload the first yarn spindle product to the target stacking position according to the position information of the target stacking position, so that the first yarn spindle product matching the first terminal can be loaded on the truck when the yarn spindle clamping component establishes the Bluetooth connection with the first terminal of the flatbed truck. Also, the position of the yarn spindle on the truck and the product information of the yarn spindle are sent to the first terminal through the Bluetooth connection for associated storage, so that the yarn spindle at the corresponding position can be accurately unloaded to the corresponding purchaser when unloaded from the truck subsequently.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

The accompanying drawings are used to better understand the present solution, and do not constitute a limitation to the present disclosure. where:
FIG. 1 is a structural diagram of a yarn spindle loading and unloading system according to an embodiment of the present disclosure;
FIG. 2 is a structural diagram of a yarn spindle clamping component according to an embodiment of the present disclosure;
FIG. 3 is a flow chart of a yarn spindle loading and unloading method according to an embodiment of the present disclosure; and
FIG. 4 is a block diagram of an electronic device according to an embodiment of the present disclosure.

### DETAILED DESCRIPTION

Hereinafter, descriptions of example embodiments of the present disclosure are made with reference to accompanying drawings, include various details of the embodiments of the present disclosure to facilitate understanding, and should be considered as merely exemplary. Therefore, those having ordinary skills in the art should realize, various changes and modifications may be made to embodiments described herein, without departing from the scope of the present disclosure. Likewise, for clarity and conciseness, descriptions of well-known functions and structures are omitted in the following descriptions.

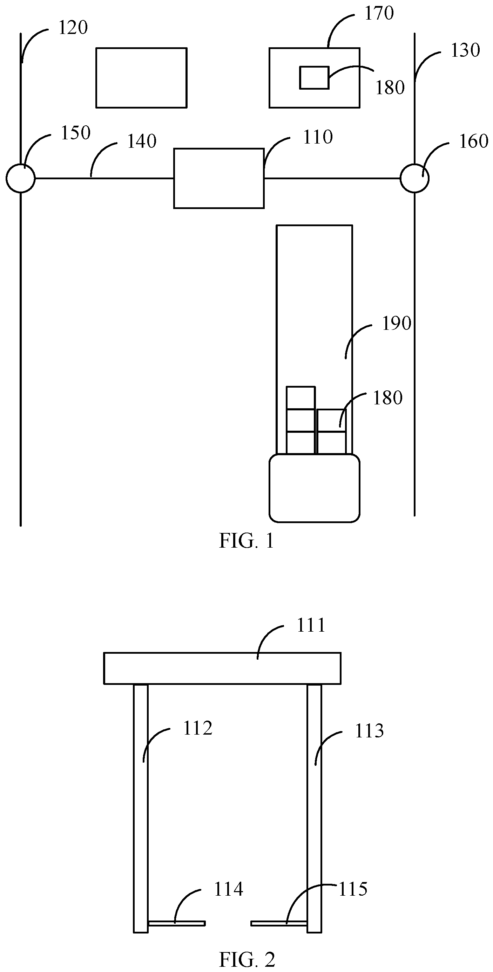

FIG. 1 is a structural diagram of a yarn spindle loading and unloading system according to an embodiment of the present disclosure.

As shown in FIG. 1, the yarn spindle loading and unloading system includes a yarn spindle clamping component 110, a first track 120 and a second track 130 parallel to each other, and a third track 140. The first end and the second end of the third track 140 are vertically connected to the first track 120 and the second track 130 respectively through a first slider 150 and a second slider 160. The yarn spindle clamping component 110 is slidably arranged on the third track 140. The first track 120, the second track 130 and the third track 140 are suspended above a yarn spindle unloading platform 170, and the yarn spindle unloading platform 170 is located between the orthographic projection of the first track 120 on the ground and the orthographic projection of the second track 130 on the ground.

It can be understood that one or more yarn spindle unloading platforms 170 may be arranged between the orthographic projection of the first track 120 on the ground and the orthographic projection of the second track 130 on the ground. Each yarn spindle unloading platform 170 is used to place a yarn spindle product 180 to facilitate the yarn spindle clamping component 110 to clamp the yarn spindle product 180 from the yarn spindle unloading platform 170.

It can be understood that a flatbed truck, when loading, should also be located between the orthographic projection of the first track 120 on the ground and the orthographic projection of the second track 130 on the ground, so that the yarn spindle clamping component 110 can unload the clamped yarn spindle product 180 onto the flatbed 190 of the flatbed truck.

It can be understood that the yarn spindle clamping component 110 is suspended under the yarn spindle unloading platform 170.

It can be understood that the yarn spindle clamping component 110 may be provided with a first Bluetooth module, a camera and other components to establish a Bluetooth connection with a first terminal corresponding to the flatbed truck, take images, etc.

According to the above implementation, the yarn spindle loading and unloading system can be used to transport the yarn spindle products on the yarn spindle unloading platform onto the flatbed 190 of the flatbed truck without the need for manpower, improving loading and unloading efficiency of yarn spindles.

FIG. 2 is a structural diagram of the yarn spindle clamping component 110 according to an embodiment of the present disclosure.

As shown in FIG. 2, the yarn spindle clamping component 110 includes a support platform 111, a first clamping plate 112 and a second clamping plate 113. Here, the support platform 111 is slidably arranged in the third track 140, and the first end of the first clamping plate 112 and the first end of the second clamping plate 113 are oppositely and slidably suspended under the support platform 111. Here, the support platform 111 is configured to control the first clamping plate 112 and the second clamping plate 113 to slide on the support platform 111 in a direction close to each other or in a direction away from each other.

It can be understood that, when the yarn spindle clamping component 110 is used to clamp a yarn spindle product, the first clamping plate 112 and the second clamping plate 113 can slide downward so that the yarn spindle product is located between the first clamping plate 112 and the second clamping plate 113. Then, the yarn spindle clamping component 110 controls the first clamping plate 112 and the second clamping plate 113 to slide in the direction close to each other, so that the yarn spindle product is closely attached to the inner side surfaces of the first clamping plate 112 and the second clamping plate 113. Here, the inner side surface is a surface close to the yarn spindle product.

It can be understood that, when the yarn spindle clamping component 110 is used to unload the clamped yarn spindle product to a stacking position on the flatbed truck, the first clamping plate 112 and the second clamping plate 113 are controlled to slide downward to make the yarn spindle product fall to the stacking position on the flatbed truck. Then, the yarn spindle clamping component 110 controls the first clamping plate 112 and the second clamping plate 113 to slide in the direction away from each other to release the yarn spindle.

In an example, as shown in FIG. 2, the yarn spindle clamping component 110 further includes a first foldable plate 114 and a second foldable plate 115. Here, the first foldable plate 114 is foldably connected to the second end of the first clamping plate 112, and the second foldable plate 115 is foldably connected to the second end of the second clamping plate 113.

It can be understood that the support platform 111 is used to control the first foldable plate 114 to be perpendicular to the first clamping plate 112 or parallel to and closely attached to the first clamping plate 112, and is used to control the second foldable plate 115 to be perpendicular to the second clamping plate 113 or parallel to and closely attached to the second clamping plate 113.

For example, the support platform 111 controls the first foldable plate 114 to rotate counterclockwise around a connection point between the first clamping plate 112 and the first foldable plate 114 starting from a position where the first foldable plate 114 is perpendicular to the first clamping plate 112, until the first foldable plate 114 is parallel to and closely attached to the first clamping plate 112.

For another example, the support platform 111 controls the second foldable plate 115 to rotate clockwise around the connection point between the second clamping plate 113 and the second foldable plate 115 starting from a position where the second foldable plate 115 is perpendicular to the second clamping plate 113, until the second foldable plate 115 is parallel to and closely attached to the second clamping plate 113.

According to the above implementation, the yarn spindle clamping component can stably clamp the yarn spindle and unload the yarn spindle product to a corresponding stacking position.

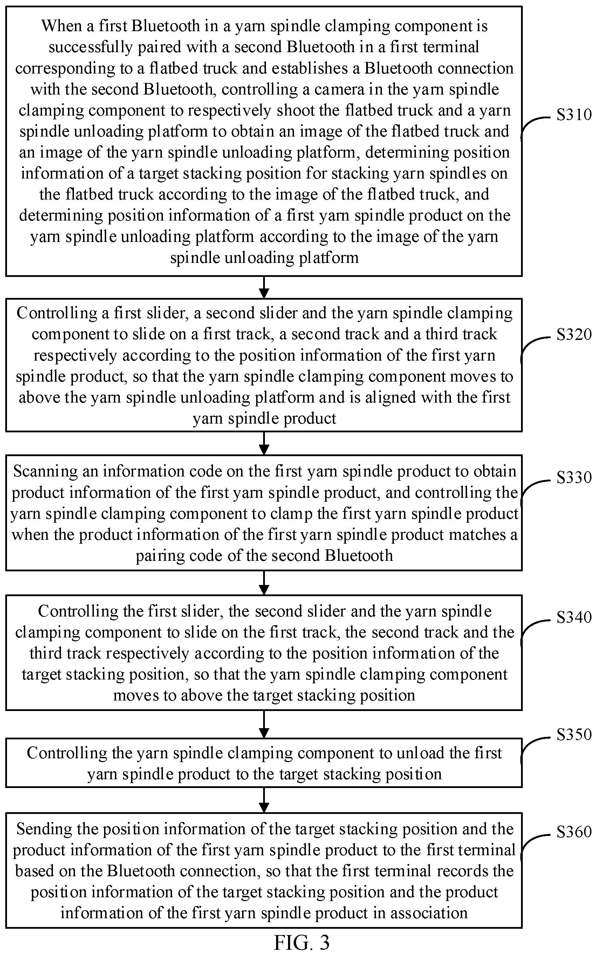

FIG. 3 is a flow chart of a yarn spindle loading and unloading method according to an embodiment of the present disclosure.

As shown in FIG. 3, the yarn spindle loading and unloading method may be applied to a yarn spindle clamping component, and the method includes:
S310: when a first Bluetooth module in the yarn spindle clamping component is successfully paired with a second Bluetooth module in a first terminal corresponding to a flatbed truck and establishes a Bluetooth connection with the second Bluetooth module, controlling a camera in the yarn spindle clamping component to respectively shoot a flatbed truck and a yarn spindle unloading platform to obtain an image of the flatbed truck and an image of the yarn spindle unloading platform, determining position information of a target stacking position for stacking yarn spindles on the flatbed truck according to the image of the flatbed truck, and determining position information of a first yarn spindle product on the yarn spindle unloading platform according to the image of the yarn spindle unloading platform;
S320: controlling a first slider, a second slider and the yarn spindle clamping component to slide on a first track, a second track and a third track respectively according to the position information of the first yarn spindle product, so that the yarn spindle clamping component moves to above the yarn spindle unloading platform and is aligned with the first yarn spindle product, where the third track is perpendicular to the first track and the second track parallel to each other, and the first track, the second track and the third track are suspended in air;
S330: scanning an information code on the first yarn spindle product to obtain product information of the first yarn spindle product, and controlling the yarn spindle clamping component to clamp the first yarn spindle product when the product information of the first yarn spindle product matches a pairing code of the second Bluetooth module;
S340: controlling the first slider, the second slider and the yarn spindle clamping component to slide on the first track, the second track and the third track respectively according to the position information of the target stacking position, so that the yarn spindle clamping component moves to above the target stacking position;
S350: controlling the yarn spindle clamping component to unload the first yarn spindle product to the target stacking position; and
S360: sending the position information of the target stacking position and the product information of the first yarn spindle product to the first terminal based on the Bluetooth connection, so that the first terminal records the position information of the target stacking position and the product information of the first yarn spindle product in association.

It can be understood that the yarn spindle clamping component may be the yarn spindle clamping component in any yarn spindle loading and unloading system in embodiments of the present disclosure.

It can be understood that there may be one or more images of the flatbed truck taken at different angles. There may be one or more images of the yarn spindle unloading platform taken at different angles.

It can be understood that a trained neural network model may be used to recognize one or more images of the flatbed truck taken at different angles to obtain the position information of the target stacking position for stacking yarn spindles on the flatbed truck. The position information may include coordinate information of a stereoscopic three-dimensional space. The three-dimensional space may accommodate one yarn spindle product.

It can be understood that another trained neural network model may be used to recognize one or more images of the yarn spindle unloading platform to obtain the position information of the first yarn spindle product on the yarn spindle unloading platform. The position information may include three-dimensional coordinates of the position at which the first yarn spindle product is located.

It can be understood that, according to the ordinate in the position information of the first yarn spindle product, the first slider and the second slider are controlled to slide on the first track and the second track and slide to positions where the ordinates are same as the aforementioned ordinate, and according to the abscissa in the position information of the first yarn spindle product, the yarn spindle clamping component is controlled to slide on the third track and slide to a position corresponding to this abscissa.

It can be understood that the information code is provided on the outer packaging of the yarn spindle product, and the information code may record information such as production batch, specification information, production date, production device information, and the number of yarn spindles included in the yarn spindle product.

It can be understood that the information code may be a QR code or a bar code.

It can be understood that the yarn spindle clamping component may obtain product information corresponding to the pairing code of the second Bluetooth module from a warehouse system, and then compare the product information with the product information of the first yarn spindle product. If the product information is consistent with the product information of the first yarn spindle product, it is considered that the product information of the first yarn spindle product matches the pairing code of the second Bluetooth module. If the product information is inconsistent with the product information of the first yarn spindle product, it is considered that the product information of the first yarn spindle product does not match the pairing code of the second Bluetooth module.

In an example, the product information may be the production batch. One pairing code corresponds to one or more production batches. For example, one flatbed truck typically transports yarn spindle products from the same production batch. Of course, when purchasers need not too many yarn spindles, yarn spindles required by a plurality of purchasers may be transported together by one flatbed truck to reduce the transportation cost. At this time, one flatbed truck may transport yarn spindle products from a plurality of different production batches.

In this way, when multiple pieces of product information corresponding to the pairing code of the second Bluetooth module are obtained from a warehouse system, if the product information of the first yarn spindle product is any one of the multiple pieces of product information obtained, it is considered that the product information of the first yarn spindle product matches the pairing code of the second Bluetooth module; if the product information of the first yarn spindle product is not any one of the multiple pieces of product information obtained, it is considered that the product information of the first yarn spindle product does not match the pairing code of the second Bluetooth module.

It can be understood that according to the ordinate in the position information of the target stacking position, the first slider and the second slider are controlled to slide on the first track and the second track respectively and slide to positions where ordinates are same as the aforementioned ordinate, and according to the abscissa in the position information of the target stacking position, the yarn spindle clamping component is controlled to slide on the third track and slide to a position where an abscissa is same as the aforementioned abscissa.

It can be understood that the first terminal can record the position information of the target stacking position and the product information of the first yarn spindle product in association in the form of a table when receiving the position information of the target stacking position and the product information of the first yarn spindle product.

According to the above implementation, when the yarn spindle clamping component establishes a Bluetooth connection with the first terminal of the flatbed truck, the first yarn spindle product matching the first terminal is loaded on the truck, and the position of the yarn spindle on the truck and the product information of the yarn spindle are sent to the first terminal through the Bluetooth connection for associated storage. In this way, when a plurality of yarn spindles with different product information are subsequently unloaded from the truck, the yarn spindles at the corresponding positions can be accurately unloaded to corresponding purchasers, and the purchasers can obtain yarn spindles meeting their requirements.

In an implementation, the above method may further include: controlling the first Bluetooth module to pair with the second Bluetooth module in response to a pairing request of the second Bluetooth module in the first terminal; and establishing a Bluetooth connection between the first Bluetooth module and the second Bluetooth module when the first Bluetooth module is successfully paired with the second Bluetooth and the first Bluetooth is in an unconnected state.

It can be understood that the first Bluetooth module performs Bluetooth scanning in an area within a set range, and is paired with the second Bluetooth module if scanning the second Bluetooth module. If the first Bluetooth module is not connected to any Bluetooth module, the first Bluetooth module may establish a Bluetooth connection with the second Bluetooth module.

It can be understood that the first Bluetooth module performs Bluetooth scanning in the area within the set range when the first Bluetooth module is not connected to any Bluetooth module. When the first Bluetooth module is connected to another Bluetooth module, the first Bluetooth module does not perform Bluetooth scanning in the area within the set range.

According to the above implementation, a communication connection between the first Bluetooth module in the yarn spindle clamping component and the first terminal corresponding to the flatbed truck can be established by means of Bluetooth pairing and Bluetooth connection.

In an implementation, the above method may further include:
when the product information of the first yarn spindle product does not match the pairing code of the second Bluetooth module, making a request to a warehouse system to replace the first yarn spindle product, and stopping the replacement of the first yarn spindle product until the product information of a replaced first yarn spindle product matches the pairing code of the second Bluetooth module.

It can be understood that, when the product information of the first yarn spindle product does not match the pairing code of the second Bluetooth module, the flatbed truck can be shot again to determine whether the flatbed truck is full of yarn spindles based on the image of the flatbed truck taken again. If the flatbed truck is full of yarn spindles, the yarn spindle clamping component is controlled to stop working. If no yarn spindle is assembled, a request is made to the warehouse system to replace the first yarn spindle product. At this time, if a request to stop loading and unloading returned by the warehouse system is received, the yarn spindle clamping component is controlled to stop working in response to the request to stop loading and unloading.

According to the above implementation, it can be ensured that the yarn spindle products loaded on the flatbed truck are yarn spindle products that need to be transported this time.

In an implementation, the method may further include: receiving a request to stop loading and unloading sent by the first terminal based on the Bluetooth connection; and controlling the yarn spindle clamping component to stop working in response to the request to stop loading and unloading.

It can be understood that the first terminal may count received product information and position information, and may send the request to stop loading and unloading to the yarn spindle clamping component when the quantity of product information of a certain batch reaches a set quantity threshold.

According to the above implementation, the first terminal may decide whether to stop the loading of yarn spindles.

In an implementation, the above method may further include:
controlling the yarn spindle clamping component to stop working when determining based on the image of the flatbed truck that the flatbed truck is full of yarn spindles.

According to the above implementation, when the flatbed truck is full of yarn spindles, the loading of yarn spindles can be stopped.

In the technical solution of the present disclosure, acquisition, storage and application of the user's personal information involved are in compliance with relevant laws and regulations, and do not violate public order and good customs.

According to embodiments of the present disclosure, the present disclosure also provides an electronic device, a readable storage medium and a computer program product.

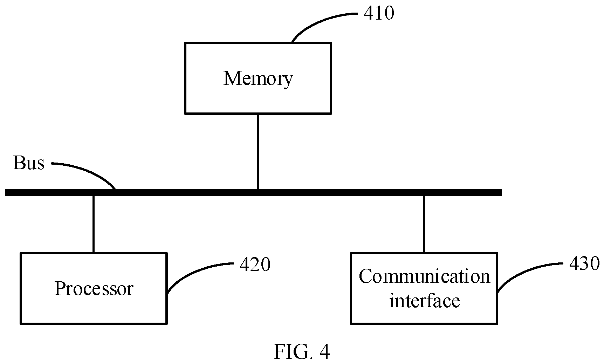

FIG. 4 is a structural block diagram of an electronic device according to an embodiment of the present disclosure. As shown in FIG. 4, the electronic device includes: a memory 410 and a processor 420, and the memory 410 stores a computer program that can run on the processor 420. There may be one or more memories 410 and processors 420. The memory 410 may store one or more computer programs, and the one or more computer programs cause the electronic device to perform the method provided in the above method embodiment, when executed by the electronic device. The electronic device may also include: a communication interface 430 configured to communicate with an external device for data interactive transmission.

If the memory 410, the processor 420 and the communication interface 430 are implemented independently, the memory 410, the processor 420 and the communication interface 430 may be connected to each other and complete communication with each other via a bus. The bus may be an industry standard architecture (ISA) bus, a peripheral component interconnect (PCI) bus, or an extended industry standard architecture (EISA) bus, etc. The bus may be divided into an address bus, a data bus, a control bus, etc. For ease of representation, the bus is represented by only one thick line in FIG. 4, but this thick line does not represent only one bus or only one type of bus.

Optionally, in a specific implementation, if the memory 410, the processor 420 and the communication interface 430 are integrated on one chip, the memory 410, the processor 420 and the communication interface 430 may communicate with each other via an internal interface.

It should be understood that the above processor may be a central processing unit (CPU) or other general-purpose processor, a digital signal processor (DSP), an application specific integrated circuit (ASIC), a field programmable gate array (FPGA) or other programmable logic device, a discrete gate or transistor logic device, a discrete hardware component, etc. The general-purpose processor may be a microprocessor or any conventional processor, etc. It is worth noting that the processor may be a processor that supports an advanced RISC machines (ARM) architecture.

Further, optionally, the above memory may include a read-only memory and a random access memory, and may also include a non-volatile random access memory. The memory may be a volatile memory or a non-volatile memory, or may include both a volatile memory and a non-volatile memory. Here, the non-volatile memory may include a read-only memory (ROM), a programmable ROM (PROM), an erasable PROM (EPROM), an electrically EPROM (EEPROM) or a flash memory. The volatile memory may include a random access memory (RAM), which acts as an external cache. By way of illustration and not limitation, many forms of RAMs are available, for example, static RAM (SRAM), dynamic random access memory (DRAM), synchronous DRAM (SDRAM), double data rate SDRAM (DDR SDRAM), enhanced SDRAM (ESDRAM), synchlink DRAM (SLDRAM) and direct RAMBUS RAM (DR RAM).

The above embodiments may be implemented in whole or in part by software, hardware, firmware or any combination thereof. When implemented by software, they may be implemented in the form of a computer program product in whole or in part. The computer program product includes one or more computer instructions. When the computer instructions are loaded and executed on a computer, processes or functions described in the embodiments of the present disclosure are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, digital subscriber line (DSL)) or wireless (e.g., infrared, Bluetooth, microwave, etc.) manner. The computer readable storage medium may be any available medium that can be accessed by a computer, or a data storage device such as server or data center that is integrated with one or more available media. The available media may be magnetic media (for example, floppy disk, hard disk, magnetic tape), optical media (for example, Digital Versatile Disc (DVD)), or semiconductor media (for example, Solid State Disk (SSD)), etc. It is worth noting that the computer readable storage medium mentioned in the present disclosure may be a non-volatile storage medium, in other words, may be a non-transitory storage medium.

Those having ordinary skills in the art can understand that all or some of steps for implementing the above embodiments may be completed by hardware, or may be completed by instructing related hardware through a program. The program may be stored in a computer readable storage medium. The above storage medium may be a read-only memory, a magnetic disk or an optical disk, etc.

In the description of the embodiments of the present disclosure, the description with reference to the terms "an embodiment", "some embodiments", "example", "specific example" or "some examples", etc. means that specific features, structures, materials or characteristics described in conjunction with the embodiment or example are included in at least one embodiment or example of the present disclosure. Moreover, specific features, structures, materials or characteristics described may be combined in a suitable manner in any one or more embodiments or examples. In addition, those skilled in the art can integrate and combine different embodiments or examples and features of different embodiments or examples described in this specification without conflicting with each other.

In the description of the embodiments of the present disclosure, "/" represents or, unless otherwise specified. For example, A/B may represent A or B. The term "and/or" herein only describes an association relation of associated objects, which indicates that there may be three kinds of relations, for example, A and/or B may indicate that only A exists, or both A and B exist, or only B exists.

In the description of the embodiments of the present disclosure, the terms "first" and "second" are only for purpose of description, and cannot be construed to indicate or imply the relative importance or implicitly point out the number of technical features indicated. Therefore, the feature defined with "first" or "second" may explicitly or implicitly include one or more features. In the description of the embodiments of the present disclosure, "multiple" means two or more, unless otherwise specified.

The above descriptions are only example embodiments of the present disclosure and not intended to limit the present disclosure. Any modifications, equivalent replacements, improvements and others made within the spirit and principle of the present disclosure shall be contained in the protection scope of the present disclosure.

## Claims

1. A yarn spindle loading and unloading method, applied to a yarn spindle clamping component (110), the method comprising:
when a first Bluetooth module in the yarn spindle clamping component (110) establishes a Bluetooth connection with a second Bluetooth module in a first terminal corresponding to a flatbed truck:
controlling a camera in the yarn spindle clamping component (110) to respectively shoot the flatbed truck and a yarn spindle unloading platform (170) to obtain an image of the flatbed truck and an image of the yarn spindle unloading platform (170);
determining position information of a target stacking position for stacking yarn spindles on the flatbed truck according to the image of the flatbed truck; and
determining position information of a first yarn spindle product on the yarn spindle unloading platform (170) according to the image of the yarn spindle unloading platform (S310);
controlling a first slider (150), a second slider (160) and the yarn spindle clamping component (110) to slide on a first track (120), a second track (130) and a third track (140) respectively according to the position information of the first yarn spindle product, so that the yarn spindle clamping component (110) moves to above the yarn spindle unloading platform (170) and is aligned with the first yarn spindle product, wherein the third track (140) is perpendicular to the first track (120) and the second track, the first track and the second track are (130) parallel to each other, and the first track (120), the second track (130) and the third track (140) are suspended in air (S320);
scanning an information code on the first yarn spindle product to obtain product information of the first yarn spindle product, and controlling the yarn spindle clamping component (110) to clamp the first yarn spindle product when the product information of the first yarn spindle product matches a pairing code of the second Bluetooth module (S330);
controlling the first slider (150), the second slider (160) and the yarn spindle clamping component (110) to slide on the first track (120), the second track (130) and the third track (140) respectively according to the position information of the target stacking position, so that the yarn spindle clamping component (110) moves to above the target stacking position (S340);
controlling the yarn spindle clamping component (110) to unload the first yarn spindle product to the target stacking position (S350); and
sending the position information of the target stacking position and the product information of the first yarn spindle product to the first terminal based on the Bluetooth connection, so that the first terminal records the position information of the target stacking position and the product information of the first yarn spindle product in association (S360).

2. The method of claim 1, further comprising:
controlling the first Bluetooth module to pair with the second Bluetooth module in response to a pairing request of the second Bluetooth module in the first terminal; and
establishing the Bluetooth connection between the first Bluetooth module and the second Bluetooth module when the first Bluetooth module is successfully paired with the second Bluetooth module and the first Bluetooth module is in an unconnected state.

3. The method of any preceding claim, further comprising:
when the product information of the first yarn spindle product does not match the pairing code of the second Bluetooth module, making a request to a warehouse system to replace the first yarn spindle product, and stopping replacement of the first yarn spindle product until product information of a replaced first yarn spindle product matches the pairing code of the second Bluetooth module.

4. The method of any preceding claim, further comprising:
receiving a request to stop loading or unloading sent by the first terminal based on the Bluetooth connection; and
controlling the yarn spindle clamping component (110) to stop working in response to the request to stop loading or unloading.

5. The method of any preceding claim, further comprising:
controlling the yarn spindle clamping component (110) to stop working when determining, based on the image of the flatbed truck, that the flatbed truck is full of yarn spindles.

6. A yarn spindle loading and unloading system, comprising:
a first track (120) and a second track (130) parallel to each other;
a third track (140), wherein a first end and a second end of the third track (140) are vertically connected to the first track (120) and the second track (130) respectively through a first slider (150) and a second slider (160); and the first track (120), the second track (130) and the third track (140) are suspended above a yarn spindle unloading platform (170), and the yarn spindle unloading platform (170) is located between an orthographic projection of the first track (120) on ground and an orthographic projection of the second track (130) on ground; and
a yarn spindle clamping component (110) slidably arranged on the third track (140) and configured to perform the method according to any one of claims 1 to 5.

7. The system of claim 6, wherein the yarn spindle clamping component (110) comprises a support platform (111), a first clamping plate (112) and a second clamping plate (113);
wherein the support platform (111) is slidably arranged in the third track (140), and a first end of the first clamping plate (112) and a first end of the second clamping plate (113) are oppositely and slidably suspended under the support platform (111);
wherein the support platform (111) is configured to control the first clamping plate (112) and the second clamping plate (113) to slide on the support platform (111) in a direction close to each other or in a direction away from each other.

8. The system of claim 6 or claim 7, wherein the yarn spindle clamping component (110) further comprises a first foldable plate (114) and a second foldable plate (115); and
wherein the first foldable plate (114) is foldably connected to a second end of the first clamping plate (112), and the second foldable plate (115) is foldably connected to a second end of the second clamping plate (113).

9. A non-transitory computer-readable storage medium storing a computer instruction thereon, wherein the computer instruction, when executed by a computer, causes the computer to perform the method of any one of claims 1 to 5.
